# FASCICULE DE BREVET EUROPEEN

(11) **EP 0 414 596 B1**
(45) Date de publication et mention de la délivrance du brevet: **20.07.1994**
(21) Numéro de dépôt: 90402306.6
(22) Date de dépôt: 17.08.1990
(51) Int. Cl.: H04N 7/01

(54) **Dispositif de conversion de fréquence trame et du nombre de lignes pour un récepteur de télévision haute définition**
Vorrichtung zur Umwandlung der Bildfrequenz und des Zeilenanzähles für einen hochauflösenden Fernsehempfänger
Device for converting the field frequency and line number in a high definition television receiver

(30) Priorité: 22.08.1989 FR 8911102
(43) Date de publication de la demande: 27.02.1991
(73) Titulaire: LABORATOIRE EUROPEEN DE RECHERCHES ELECTRONIQUES AVANCEES, 92400 Courbevoie (FR)
(72) Inventeur: Gillies, David, F-92045 Paris la Défense (FR); Moraillon, Jean-Yves, F-92045 Paris la Défense (FR)
(74) Mandataire: Ruellan-Lemonnier, Brigitte

(56) Documents cités:
- EP-A- 0 241 284
- EP-A- 0 322 956
- IEEE 1989 INTERNATIONAL CONFERENCE ON CONSUMER ELECTRONICS, DIGEST OF TECHNICAL PAPERS, Rosemont, 6-9 juin 1989, pages 10-11, IEEE, New York, US; D. GILLIES: "A 900/02:1/100 HZ upconverter for 1250/2:1/50 HZ and 625/2:1/50 HZ input signals"
- ELECTRONICS & WIRELESS WORLD, vol. 94,no. 1631, September 1988, pages 845-885, Sutton, GB; T. IVALL: "Eureka 95 - a world standard?"

## Description

La présente invention concerne un dispositif de conversion de fréquence trame et du nombre de lignes pour un récepteur de télévision haute définition, plus particulièrement un dispositif de conversion de fréquence trame et du nombre de lignes pour un récepteur de télévision haute définition susceptible de recevoir en entrée des signaux de type haute définition provenant plus particulièrement d'une source haute définition 625 lignes, entrelacées, 50Hz (625/2:1/50Hz). Le dispositif de la présente invention s'applique aussi aux signaux de définition standard tels que les signaux 625/2:1/50Hz, PAL, SECAM, MAC.

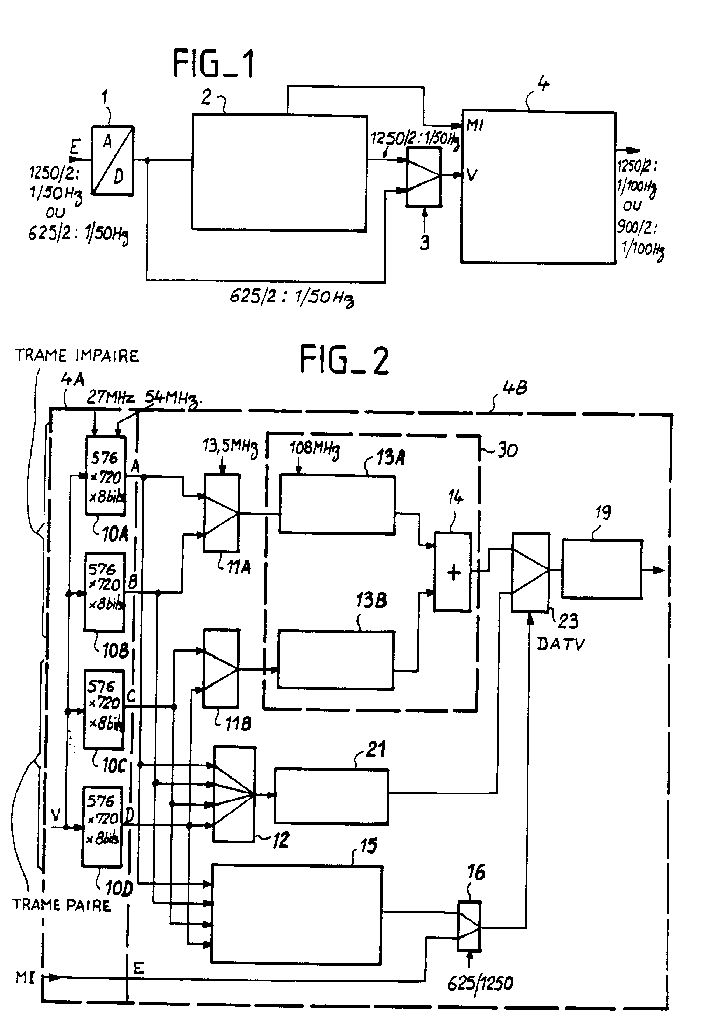

On a déjà proposé dans la demande de brevet français N° 89 03861 du 23 Mars 1989 (équivalent à EP-A-0 391 760 déposé le 20 Mars 1990, et publié le 10 octobre 1990)., au nom de la Demanderesse, un dispositif de conversion de fréquence trame pour récepteur de télévision haute définition. Comme représenté sur la figure 1, ce dispositif comporte essentiellement un convertisseur analogique-numérique 1 qui reçoit en entrée des signaux vidéo E tels que des signaux haute définition 1250/2:1/50Hz en bande de base ou comprimés selon le procédé HD-MAC dans le standard 625/2:1/50Hz appelé ci-après signaux haute définition de type 625/2:1/50Hz ou des signaux standards 625/2:1/50Hz PAL, SECAM ou MAC. Les signaux standards du type 625/2:1/50Hz en sortie du convertisseur 1 sont envoyés directement sur un dispositif de commutation 3 tandis que les signaux haute définition sont envoyés sur le dispositif 3 par l'intermédiaire d'un décodeur 2 de réduction de largeur de bande de type connu. Le dispositif de commutation 3 envoit soit des signaux 1250/2:1/50Hz, soit des signaux 625/2:1/50Hz vers un dispositif de conversion de fréquence 4 tel que représenté sur la figure 2 et décrit dans la demande de brevet français N° 89 03861 au nom de la Demanderesse. Ce dispositif de conversion de fréquence 4 reçoit une information DATV (Digital Assisted Television). Ce signal DATV issu du décodeur 2 comporte des informations de mouvement MI. Le dispositif de conversion de fréquence 4 donne en sortie un signal S utilisé pour l'affichage sur l'écran. Ce signal de sortie S est un signal haute définition du type 1250/2:1/100Hz ou 900/2:1/100Hz. Dans le dispositif de la figure 1, la conversion de fréquence trame est réalisée au niveau du circuit 4. Pour ce faire et comme représenté sur la figure 2, le circuit 4 comporte en entrée une mémoire d'image pour mémoriser deux trames, à savoir les trames paire et impaire, selon le standard d'entrée, c'est-à-dire à une fréquence-trame de 50Hz (durée de trame de 20 millisecondes). Cette mémoire permet de comprimer selon un facteur 2 cette durée afin d'obtenir la fréquence-trame de sortie de 100Hz, à savoir une durée de trame de 10 millisecondes. En fait, comme représenté sur la figure 2, cette mémoire d'image est constituée de quatre mémoires 10A, 10B, 10C, 10D permettant de stocker respectivement les points paires des trames paires,les points impairs des trames paires, les points pairs des trames impaires et les points impairs des trames impaires. Chaque mémoire présente une capacité de 576 lignes x 720 points x 8 bits pour pouvoir stocker une image de 1250 lignes x 1440 points correspondant à une image haute définition décompactée. L'utilisation de quatre mémoires 10A, 10B, 10C, 10D a pour but de limiter la fréquence de lecture des mémoires à 54 MHz. Comme décrit de manière plus détaillée ci-après, des multiplexeurs 11A, 11B ou 12 permettront de reconstituer le train d'échantillons à 108MHz.

D'autre part, comme représenté sur la figure 2, le circuit 4 comporte une partie 4B qui sera décrite de manière plus détaillée ci-après et qui permet de réaliser différentes opérations de filtrage, de décimation, d'interpolation verticale. Ces opérations se réalisent à la fréquence trame souhaitée, à savoir 100Hz dans le mode de réalisation représenté. On remarque donc que le circuit 4 est constitué de deux parties distinctes, à savoir une partie mémoire 4A permettant de réaliser la conversion de fréquence trame et une partie 4B. Or, comme décrit ci-dessus, la partie 4A nécessite une surface mémoire importante.

La présente invention a pour but de proposer un nouveau dispositif de conversion de fréquence trame et du nombre de lignes pour un récepteur de télévision haute définition permettant de réaliser la conversion de fréquence en utilisant moins de capacité mémoire dans le cas de signaux 625/2:1/50Hz haute défintion ou de signaux 625/2:1/50Hz de type standard.

Ainsi, la présente invention a pour objet un dispositif de conversion de fréquence trame et du nombre de lignes permettant de traiter des signaux vidéo haute définition comportant un nombre de lignes et une fréquence trame déterminés reçus par un récepteur de télévision haute définition susceptible de recevoir en entrée des signaux vidéo correspondant à des standards différents et de donner en sortie un signal de type haute définition à une nouvelle fréquence trame et sur un nouveau nombre de lignes, le dispositif comportant une première mémoire pour stocker les trames du signal vidéo en entrée, cette mémoire délivrant en sortie un signal vidéo à la nouvelle fréquence trame, caractérisé en ce qu'il comporte de plus un décodeur de réduction de bande passante connecté en sortie de la mémoire et délivrant-en sortie séparément les trames paires et les trames impaires du signal vidéo à la nouvelle fréquence trame et un circuit de traitement vidéo connecté en sortie du décodeur de réduction de bande passante qui réalise une interpolation verticale et une conversion du nombre de lignes de manière à délivrer un signal vidéo d'affichage à la nouvelle fréquence trame et au nouveau nombre de lignes.

Selon un mode de réalisation préférentiel, le circuit de traitement vidéo est constitué par :
- un circuit de traitement des signaux de type statique connecté respectivement sur les sorties du décodeur de réduction de bande passante donnant les trames paires et impaires et délivrant un signal à la fréquence trame et au nombre de lignes souhaités ;
- un circuit de traitement des signaux de type dynamique connecté alternativement aux sorties du décodeur de réduction de bande passante donnant les trames paires et impaires par l'intermédiaire d'un premier circuit de commutation et délivrant un signal à la fréquence trame et au nombre de lignes souhaités, et
- un deuxième circuit de commutation connecté respectivement au circuit de traitement des signaux de type statique et au circuit de traitement des signaux de type dynamique, la commutation du dispositif étant commandée par un signal de détection de mouvement.

De même, selon un mode de réalisation préférentiel, le décodeur de réduction de bande passante comporte au moins m mémoires de trame (m ≧ 3) connectées en série en sortie de la première mémoire, un circuit de décodage et quatre sorties générant respectivement les trames paires et impaires pour les points pairs et impairs.

D'autre part, pour pouvoir utiliser le dispositif de la présente invention, aussi bien avec des signaux vidéo en entrée de type haute définition que des signaux de type standard tels que des signaux PAL ou SECAM, ce dispositif comporte de plus quatre circuits de commutation recevant chacun sur une entrée une sortie du décodeur de réduction de bande passante, et sur l'autre entrée, soit l'entrée des mémoires, soit la sortie des trois premières mémoires, lesdits circuits commutant sur l'une ou l'autre entrée en fonction d'un signal indiquant le type de signaux vidéo en entrée.

D'autres caractéristiques et avantages de la présente invention apparaîtront à la lecture de la description faite ci-après d'un mode de réalisation préférentiel avec référence aux dessins ci-annexés dans lesquels :
- la figure 1, déjà décrite, est un schéma synoptique simplifié d'un récepteur de télévision haute définition comportant un dispositif de conversion de fréquence trame tel que décrit dans la demande de brevet français N°89 03861 ;
- la figure 2, déjà décrite, est un schéma synoptique d'un mode de réalisation du dispositif de conversion de fréquence trame de la demande de brevet français N° 89 03861 ;
- la figure 3 est un schéma synoptique simplifié d'un dispositif de conversion de fréquence trame et du nombre de lignes conforme à la présente invention ;
- la figure 4 est un schéma synoptique plus détaillé du dispositif de la figure 3, et
- la figure 5 est un schéma synoptique de la partie filtrage, décimation, interpolation et conversion du nombre de lignes utilisée dans le dispositif de la présente invention.

Pour simplifier la description, dans les différentes figures les mêmes éléments portent les mêmes références.

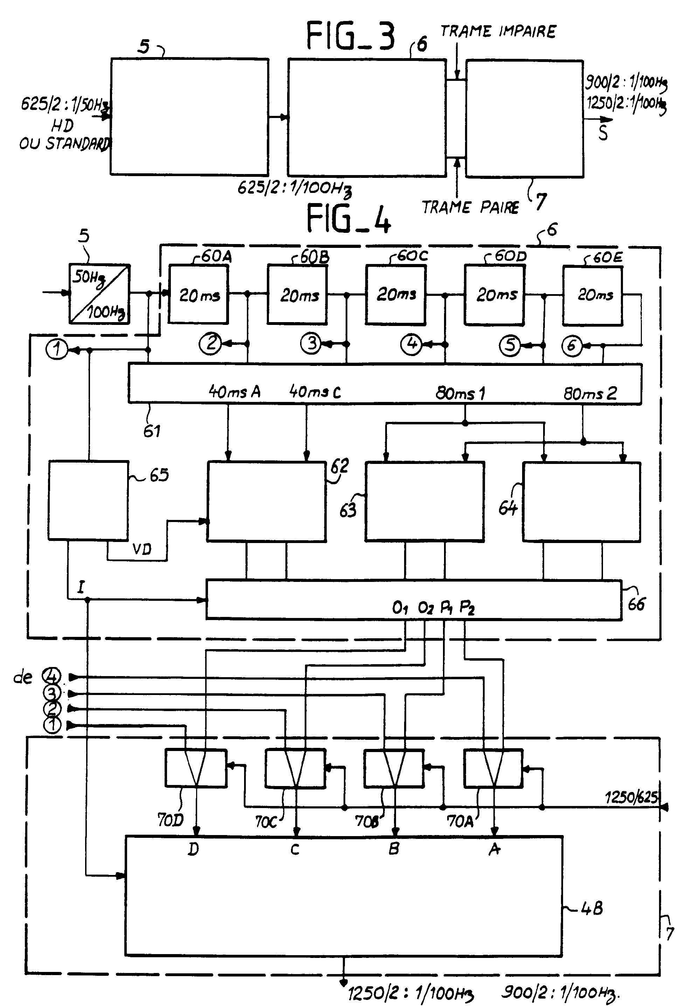

Comme représenté sur la figure 3, le dispositif de conversion de fréquence-trame et du nombre de lignes conforme à la présente invention comporte un circuit de conversion de fréquence trame 5 qui reçoit en entrée un signal vidéo de type 625/2:1/50Hz haute définition ou éventuellement un signal vidéo 625/2:1/50Hz de type standard. Le signal vidéo en entrée est en fait un signal vidéo comprimé qui a été codé pour être compatible avec le canal de transmission tels que les canaux de transmission D2-MAC ou D-MAC, comme cela sera expliqué ci-après. Le circuit de conversion 5 est constitué par une mémoire présentant une capacité de 288 lignes x 720 points x 8 bits de manière à stocker les trames successives du signal vidéo codé. L'écriture de cette mémoire est réalisée à une fréquence fonction de la fréquence trame en entrée, à savoir une fréquence de 50 Hz, dans le mode de réalisation représenté. Pour réaliser la conversion de fréquence, cette mémoire est lue à une fréquence fonction de la fréquence souhaitée en sortie, à savoir 100Hz dans le mode de réalisation représenté. Le circuit de conversion 5 est connecté à un décodeur de réduction de bande passante 6. Ce décodeur de réduction de bande passante 6 sera décrit de manière plus détaillée avec référence à la figure 4. Il correspond sensiblement au décodeur de réduction de bande passante mis au point par la société Philips dans le cadre du projet EUREKA et décrit dans "International Broadcasting Convention", IEE Conférence publication 293, publié par le Institute of Electrical Engineers, Savoy place, London, Royaume-uni, en 1988. Le décodeur 6 comporte les mêmes circuits principaux que le décodeur connu. Toutefois, ces circuits seront interconnectés de manière à obtenir en sortie, respectivement sur une sortie O les trames impaires, et sur une sortie P les trames paires. D'autre part, le décodeur 6 recevant en entrée des signaux de type 625/2:1/100Hz doit fonctionner à une fréquence double de la fréquence de fonctionnement du décodeur classique. Comme représenté sur la figure 3, le décodeur 6 est connecté à un circuit 7 dont le rôle principal est de réaliser l'interpolation et la conversion du nombre de lignes de manière à obtenir en sortie un signal S du type 1250 /2:1/100Hz ou du type 900/2:1/100Hz.

On décrira maintenant, en se référant plus particulièrement aux figures 2, 4 et 5, les différents circuits constituant le décodeur 6 et le circuit 7. Le décodeur 6 représenté sur la figure 4 est en fait un décodeur utilisé pour décomprimer un signal vidéo haute définition du type 625/2:1/50Hz qui a été comprimé pour pouvoir être transmis par un canal du type MAC. Pour pouvoir réaliser cette transmission, on a du comprimer un signal vidéo comportant 625 lignes par trame (toutes les 20 millisecondes) et 1728 points par ligne en un signal comportant 312,5 lignes par trame et 864 points par ligne. Ceci entraîne donc un rapport de compression de quatre. Dans ce cas, le principe retenu consiste à adapter le mode de compression à la résolution temporelle de l'image qu'il faut transmettre. Selon le standard choisi, on utilise trois modes de compression possibles appelés 80 ms, 20 ms, 40 ms, chaque mode préservant la résolution spatiale, la résolution temporelle de l'image ou réalisant un compromis des deux. Une description plus détaillée des trois modes de compression pourra être trouvée dans la publication mentionnée ci-dessus. Ainsi, le décodeur de réduction de bande passante 6 doit pouvoir réaliser la décompression d'un signal vidéo tel que décrit ci-dessus.

Différents algorithmes peuvent être utilisés pour réaliser ce décodage. Cependant, les algorithmes les plus performants utilisent les informations transmises sur six trames successives. Ils nécessitent donc l'utilisation de cinq mémoires de trame. En conséquence, le décodeur 6 représenté à la figure 4 comporte donc cinq mémoires de trame 60_{A}, 60_{B}, 60_{C}, 60_{D}, 60_{E}. Chaque mémoire présente une capacité de 288 lignes x 720 points x 8 bits. Ces mémoires sont connectées en série. D'autre part, l'entrée de la mémoire 60_{A} ainsi que les sorties des cinq mémoires 60_{A}, 60_{B}, 60_{C}, 60_{D}, 60_{E} sont connectées en parallèle sur un circuit 61 appelé convertisseur de structure de sous-échantillonnage (SSPC). Le rôle de ce bloc est de fournir sur des sorties 40 msA, 40msC et 80 ms1, 80 ms2, des échantillons correspondant aux structures d'échantillonnage utilisées dans les modes 40 ou 80 ms quelque soit le mode utilisé en transmission. Ce circuit 61 est connecté aux interpolateurs 62, 63, 64 réalisant respectivement le traitement de la voie 40 ms pour l'interpolateur 62, le traitement de la voie 20 ms pour l'interpolateur 63 et le traitement de la voie 80 ms pour l'interpolateur 64. De manière plus spécifique, l'interpolateur 62 est connecté aux sorties 40 msA et 40 msC du circuit 61, tandis que les interpolateurs 63 et 64 reçoivent respectivement en parallèle les sorties 80 ms1, 80 ms2 du circuit 61. D'autre part, le décodeur 6 comporte un circuit de décodage d'assistance digitale 65. Ce circuit traite les signaux contenant des informations sur le type de traitement à effectuer tels que les vecteurs mouvement ou des informations sur le mode de transmission appelés assistance digitale. Les vecteurs-mouvement VD issus du décodeur 65 sont transmis à l'interpolateur 62. Le décodeur 6 comporte aussi un sélecteur de voies 66 qui reçoit en entrée parallèlement les sorties des interpolateurs 62, 63 et 64. De manière plus spécifique, le sélecteur de voies reçoit en parallèle pour chaque interpolateur les trames paires et les trames impaires. Ceci est différent du sélecteur de voies du type connu qui était précédé d'un multiplexeur donnant des trames entrelacées. Le sélecteur 66 est commandé par une information de sélection de voies I issu du décodeur 65. Le sélecteur de voies 66 comporte quatre sorties O1, O2, P1, P2, permettant d'obtenir en parallèle les trames impaires des points impairs O1, les trames impaires des points pairs O2, les trames paires des points impairs P1 et les trames paires des points pairs P2. Comme représenté sur la figure 4, les quatre sorties du sélecteur 66 sont connectées en parallèle sur le circuit 7.

Pour que le dispositif de la présente invention puisse fonctionner aussi bien avec un signal d'entrée haute définition de type 625/2:1/50HZ qu'avec un signal de définition courante PAL, SECAM, MAC, le circuit 7 comporte en entrée quatre multiplexeurs à deux voies 70_{A}, 70_{B}, 70_{C}, 70_{D} qui reçoivent respectivement sur une entrée une des sorties du sélecteur 66 et sur l'autre entrée soit l'entrée notée 1 de la mémoire 60_{A}, soit les sorties notées respectivement 2, 3, et 4 des mémoires 60_{A}, 60_{B} et 60_{C} du décodeur 6. Dans ce cas, on utilise les mémoires du décodeur de réduction de bandes passantes comme mémoire de trame nécessaire pour réaliser la conversion au nombre de lignes souhaité et la détection de mouvement pour un signal vidéo de type standard. Les multiplexeurs 70_{A}, 70_{B}, 70_{C}, 70_{D} sont commutés sur l'une ou l'autre entrée en fonction d'un signal indiquant s'il s'agit d'un signal 625 lignes ou d'un signal haute définition 1250 lignes issu du sélecteur 66. Le circuit 7 comporte de plus un circuit 4B réalisant le filtrage et la transformation au nombre de lignes souhaité. Ce circuit 4B est identique au circuit 4B du dispositif représenté à la figure 2 et décrit dans la demande de brevet français n°89 03861 au nom de la Demanderesse.

Comme représenté sur la figure 2, le circuit 4B comporte essentiellement un circuit de traitement de type statique 30 constitué par deux circuits de filtrage vertical 13A, 13B identiques réalisant le filtrage respectivement des trames impaires pour le circuit 13A et des trames paires pour le circuit 13B et un additionneur 14 recevant les sorties des circuits 13A et 13B. De manière plus spécifique, le circuit 13A est connecté sur les entrées A et B par l'intermédiaire d'un multiplexeur 11A qui fonctionne à la vitesse de 13,5MHz. De même le circuit 13B est relié aux entrées C et D par l'intermédiaire d'un multiplexeur 11B fonctionnant à une fréquence de 13,5MHz. Les circuits de filtrage réalisent un filtrage à 108MHz et leur structure sera décrite de manière plus détaillée ci-après. Le circuit 4B comporte aussi un circuit de traitement des signaux de type dynamique 21 reliés aux entrées A, B, C et D par l'intermédiaire d'un multiplexeur 12. Les sorties 30 et 21 sont envoyées en entrée d'un circuit de commutation 23 qui commute sur l'un ou l'autre circuit en fonction d'un signal d'information de mouvement DATV issu soit de l'information de mouvement contenu dans le décodeur de réduction de bande passante, soit d'un détecteur de mouvement 15 de type connu qui est connecté sur les entrées A, B, C et D du circuit 7. La sortie du détecteur 15 ainsi que l'information de mouvement MI sont sélectionnées par l'intermédiaire d'un multiplexeur 16 qui commute sur l'une ou l'autre information en fonction d'un signal indiquant le type de signal vidéo à traiter à savoir 625/1250. La sortie du dispositif de commutation 23 est envoyée sur un circuit tampon 19 qui donne en sortie un signal vidéo S du type 1250/2:1/100Hz ou 900/2:1/100Hz.

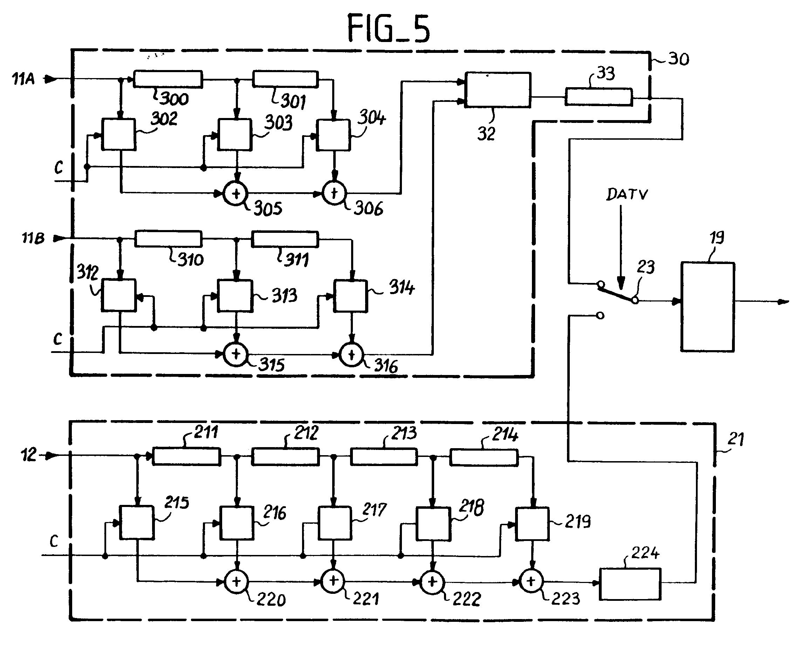

On décrira maintenant en se référant à la figure 5 un mode de réalisation possible pour les circuits 30 et 21. Dans ce cas, chaque circuit de filtrage vertical du dispositif de traitement du type statique 30 est constitué par deux cellules à retard d'une ligne 300 et 301 ou 310 et 311, par trois multiplicateurs ou cellules d'addition et de décalage 302, 303, 304 ou 312, 313, 314 et par deux additionneurs 305, 306 ou 315, 316. Les multiplicateurs reçoivent sur une de leurs entrées un coefficient multiplicateur spécifique à chacun d'entre eux et envoyé sous l'action d'un signal de commande C. Ces coefficients multiplicateurs sont fonction de l'échantillonnage du signal à afficher. Les multiplicateurs reçoivent sur leur autre entrée, soit directement la sortie du multiplexeur 11A ou 11B, soit la sortie des cellules à retard d'une ligne 300, 301 ou 310, 313. Les sorties des multiplicateurs 302, 303, 304 ou 312, 313, 314 sont envoyées sur les additionneurs 305, 306 ou 315, 316 de telle sorte que l'additionneur 305 ou 315 reçoit les sorties des multiplicateurs 302, 303 ou 312, 313 et l'additionneur 306 ou 316 reçoit la sortie de l'additionneur 305, 315 et du multiplicateur 304 ou 314. Les sorties des deux filtres verticaux paires ou impaires sont envoyées sur un additionneur 32 qui réalise aussi une coupure du signal si nécessaire. La sortie de l'additionneur 32 est envoyée sur une cellule à retard d'une ligne 33 pour égaliser les temps de transit à l'intérieur du dispositif de traitement de type statique 30 et le dispositif de traitement du type dynamique 21.

Comme représenté sur la figure 5, le dispositif de traitement de type dynamique est lui aussi constitué par un filtre vertical comportant quatre cellules à retard d'une ligne identiques 211, 212, 213 ou 214 montées en série et susceptibles de stocker chacune une ligne d'une trame. D'autre part, le filtre vertical comporte cinq multiplicateurs 215, 216, 217, 218, 219 qui reçoivent sur une de leurs entrées un coefficient multiplicateur spécifique du multiplicateur et inséré sous l'action d'un signal de commande C. Les multiplicateurs 215, 216, 217, 218, 219 reçoivent sur leur autre entrée respectivement la sortie du multiplexeur 12 pour le multiplicateur 215, la sortie de la cellule 211 pour le multiplicateur 216, la sortie de la cellule 212 pour le multiplicateur 217, la sortie de la cellule 213 pour le multiplicateur 218 et la sortie de la cellule 214 pour le multiplicateur 219. De même, les sorties des multiplicateurs 215 à 219 sont envoyées respectivement sur des additionneurs 220, 221, 222, 223. L'additionneur 220 reçoit les sorties des multiplicateurs 215 et 216. Les autres additionneurs 221, 222, 223 reçoivent respectivement la sortie d'un multiplicateur 217, 218, 219 et la sortie de l'additionneur précédent 220, 221, 222. La sortie de l'additionneur 223 est lui envoyée sur un dispositif de coupure 224. Dans le filtre vertical décrit ci-dessus, les multiplicateurs peuvent être remplacés par de simples cellules d'addition et de décalage.

On a décrit ci-dessus un mode de réalisation particulier d'un dispositif de conversion de fréquence trame et du nombre de lignes pour un récepteur de télévision haute définition susceptible de recevoir en entrée des signaux vidéo haute définition ou de signaux de type standard 625/2:1/50Hz ou similaire. Il est évident pour l'homme de l'art que le décodeur décrit ci-dessus est fonction de l'algorithme utilisé et que ce décodeur pourra être modifié sans sortir du cadre de la présente invention, notamment en ce qui concerne le nombre de mémoires de trames utilisées ou les circuits de traitement internes au décodeur, les seules contraintes imposées étant qu'ils fonctionnent à une fréquence trame égale à la fréquence trame souhaitée en sortie et que l'on obtienne en sortie du décodeur sur deux voies distinctes en parallèle les trames paires et les trames impaires. La séparation de chaque sortie paire et impaire en deux voies est en général réalisée pour limiter à 54MHz, dans le standard utilisé, la fréquence de fonctionnement des filtres.

## Revendications

1. Dispositif de conversion de fréquence trame et du nombre de lignes permettant de traiter des signaux vidéo haute définition comportant un nombre de lignes et une fréquence trame déterminés reçus par un récepteur de télévision haute définition susceptible de recevoir en entrée des signaux vidéo correspondant à des standards différents et de donner en sortie un signal de type haute définition à une nouvelle fréquence trame et sur un nouveau nombre de lignes, le dispositif comportant une première mémoire (5) pour stocker les trames du signal vidéo en entrée, cette mémoire délivrant en sortie un signal vidéo à la nouvelle fréquence trame, caractérisé en ce qu'il comporte de plus un décodeur de réduction de bande passante connecté en sortie de la mémoire et délivrant en sortie séparément les trames paires et les trames impaires du signal vidéo à la nouvelle fréquence trame et un circuit de traitement vidéo (7) connecté en sortie du décodeur de réduction de bande passante qui réalise une interpolation verticale et une conversion du nombre de lignes de manière à délivrer un signal vidéo d'affichage à la nouvelle fréquence trame et au nouveau nombre de lignes.

2. Dispositif selon la revendication 1, caractérisé en ce que le circuit de traitement vidéo est constitué par :
- un circuit de traitement des signaux de type statique (30) connecté respectivement sur les sorties du décodeur de réduction de bande passante (6) donnant les trames paires et impaires et délivrant un signal à la fréquence trame et au nombre de lignes souhaitées ;
- un circuit de traitement des signaux de type dynamique (21) connecté alternativement aux sorties du décodeur de réduction de bande passante donnant les trames paires et impaires par l'intermédiaire d'un premier circuit de commutation (12) et délivrant un signal à la fréquence trame et au nombre de lignes souhaités, et
- un deuxième circuit de commutation (23) connecté respectivement au dispositif de traitement des signaux de type statique (30) et au dispositif de traitement des signaux de type dynamique (29), la commutation du circuit étant commandée par un signal de détection de mouvement (DATV).

3. Dispositif selon la revendication 2, caractérisé en ce que le circuit de traitement des signaux de type statique est constitué par deux filtres verticaux identiques (13A, 13b) recevant respectivement les trames paires et les trames impaires issues du décodeur de réduction de bande passante et dont les sorties sont connectées à un additionneur (14).

4. Dispositif selon la revendication 3, caractérisé en ce que le circuit de traitement de signaux de type statique comporte au moins une cellule à retard d'une- ligne connectée en sortie de l'additionneur de manière à délivrer un signal de sortie synchrone du signal de sortie issu du circuit de traitement des signaux de type dynamique.

5. Dispositif selon la revendication 2, caractérisé en ce que le circuit de traitement des signaux de type dynamique est constitué par un filtre vertical (21) permettant de traiter les signaux correspondants aux trames paires et impaires.

6. Dispositif selon l'une quelconque des revendicatins 3 et 5, caractérisé en ce que chaque filtre vertical est constitué par n cellules à retard (300, 301 ou 310, 311, ou 211, 212, 213, 214) donnant un retard d'une ligne vidéo, n + 1 multiplicateurs (302, 303, 304 ou 312, 313, 314 ou 215, 216, 217, 218, 219) recevant chacun sur une entrée un coefficient multiplicateur spécifique fonction du nombre de lignes à afficher et sur l'autre entrée, soit l'entrée de la première cellule, soit la sortie de la cellule de rang j, j étant compris entre l et n, un premier additionneur (305, 315, 220) additionnant la sortie des deux premiers multiplicateurs et n - 1 additionneurs (306, 316 ou 221, 222, 223) additionnant la sortie de l'additionneur précédant et celle du multiplicateur de rang k + 1, k étant compris entre l et n, n étant fonction du nombre de trames à traiter simultanément.

7. Dispositif selon l'un quelconque des revendications 1 à 6, caractérisé en ce que la première mémoire (5) a une capacité de 288 lignes x 720 points x 8 bits.

8. Dispositif selon l'une quelconque des revendications 1 à 7, caractérisé en ce que le décodeur de réduction de bande passante comporte au moins m mémoires de trame (60A, 60B, 60C, 60D, 60E) (m ≧ 3) connectées en série en sortie de la première mémoire (5), un circuit de décodage et quatre sorties (O1, O2, P1, P2) générant respectivement les points pairs des trames paires et les points impairs des trames paires, les points pairs des trames impaires et les points impairs des trames impaires.

9. Dispositif selon la revendication 8, caractérisé en ce qu'il comporte de plus quatre circuits de commutation (70A, 70B, 70C, 70D) recevant chacun sur une entrée une sortie (O1, O2, P1, P2) du décodeur de réduction de bande passante, et sur l'autre entrée, soit l'entrée (1) des mémoires, soit la sortie (2, 3, 4) des trois premières mémoires parmis les m mémoires, lesdits circuits commutant sur l'une ou l'autre entrée en fonction d'un signal indiquant le type de signaux vidéo en entrée.

## Patentansprüche

1. Vorrichtung zum Umsetzen der Halbbildfrequenz und der Zeilenzahl zur Ermöglichung der Verarbeitung von Videosignalen mit hoher Auflösung mit einer vorbestimmten Zeilenzahl und Halbbildfrequenz, die von einem hochauflösenden Fernsehempfänger empfangen werden, der an seinem Eingang Videosignale entsprechend verschiedenen Normen empfangen kann und an seinem Ausgang ein Signal vom Typ mit hoher Auflösung mit einer neuen Halbbildfrequenz und einer neuen Zeilenzahl abgeben kann, wobei die Vorrichtung einen ersten Speicher (5) zum Speichern der Halbbilder des Eingangs-Videosignals enthält, wobei der Speicher am Ausgang ein Videosignal mit der neuen Halbbildfrequenz liefert, dadurch gekennzeichnet, daß sie ferner einen Decodierer zum Reduzieren des Durchlaßbandes aufweist, der am Ausgang des Speichers angeschlossen ist und am Ausgang getrennt die geraden und die ungeraden Halbbilder des Videosignals mit der neuen Halbbildfrequenz liefert, und eine Videoverarbeitungsschaltung (7) enthält, die am Ausgang des Decodierers zum Reduzieren des Durchlaßbandes angeschlossen ist und eine vertikale Interpolation sowie eine Umsetzung der Zeilenzahl in der Weise durchführt, daß ein Video-Anzeigesignal mit der neuen Halbbildfrequenz und der neuen Zeilenzahl geliefert wird.

2. Vorrichtung nach Anspruch 1, dadurch gekennzeichnet, daß die Videoverarbeitungsschaltung gebildet ist durch
- eine Signalverarbeitungsschaltung (30) vom statischen Typ, die jeweils an die Ausgänge des Decodierers (6) zum Reduzieren des Durchlaßbandes angeschlossen ist, die die geraden und die ungeraden Halbbilder liefern, und die ein Signal mit der gewünschten Halbbildfrequenz und der gewünschten Zeilenzahl liefert;
- eine Signalverarbeitungsschaltung (21) vom dynamischen Typ, die mittels einer ersten Umschaltschaltung abwechselnd an die die geraden und die ungeraden Halbbilder abgebenden Ausgänge des Decodierers zur Reduzierung des Durchlaßbandes angeschlossen ist und ein Signal mit der gewünschten Halbbildfrequenz und der gewünschten Zeilenzahl liefert, und
- eine zweite Umschaltschaltung (23), die an die Signalverarbeitungsschaltung (30) vom statischen Typ und an die Signalverarbeitungsschaltung (29) vom dynamischen Typ angeschlossen ist, wobei die Umschaltung dieser Schaltung durch ein Bewegungsdetektionssignal (DATV) gesteuert wird.

3. Vorrichtung nach Anspruch 2, dadurch gekennzeichnet, daß die Signalverarbeitungsschaltung vom statischen Typ durch zwei identische vertikale Filter (13A, 13B) gebildet ist, die jeweils die vom Decodierer zum Reduzieren des Durchlaßbandes abgegebenen geraden und ungeraden Halbbilder empfangen und deren Ausgänge an einen Addierer (14) angeschlossen sind.

4. Vorrichtung nach Anspruch 3, dadurch gekennzeichnet, daß die Signalverarbeitungsschaltung vom statischen Typ wenigstens eine Zelle mit einer Verzögerung um eine Zeile enthält, die am Ausgang des Addierers so angeschlossen ist, daß ein Ausgangssignal synchron mit dem Ausgangssignal der Signalverarbeitungsschaltung vom dynamischen Typ abgegeben wird.

5. Vorrichtung nach Anspruch 2, dadurch gekennzeichnet, daß die Signalverarbeitungsschaltung vom dynamischen Typ gebildet ist durch ein vertikales Filter (21), das ermöglicht, die den geraden und den ungeraden Halbbildern entsprechenden Signale zu verarbeiten.

6. Vorrichtung nach einem der Ansprüche 3 und 5, dadurch gekennzeichnet, daß jedes vertikale Filter gebildet ist durch n Verzögerungszellen (300, 301 oder 310, 311 oder 211, 212, 213, 214), die eine Verzögerung um eine Videozeile ergeben, n + 1 Multiplizierer (302, 303, 304 oder 312, 313, 314 oder 215, 216, 217, 218, 219), die jeweils an einem Eingang einen von der Anzahl der anzuzeigenden Zeilen abhängigen speziellen Multiplikationskoeffizienten und am anderen Eingang das Eingangssignal der ersten Zelle oder das Ausgangssignal der Zelle der Rangordnung j empfangen, wobei j zwischen 1 und n liegt, einen ersten Addierer (305, 315, 220), der die Ausgangssignale der zwei ersten Multiplizierer addiert, sowie n - 1 Addierer (306, 316 oder 221, 222, 223), die das Ausgangssignal des vorangehenden Addiereres und das des Multiplizierers der Rangordnung k + 1 addieren, wobei k zwischen 1 und n liegt und n von der Anzahl gleichzeitig zu verarbeitender Halbbilder abhängt.

7. Vorrichtung nach einem der Ansprüche 1 bis 6, dadurch gekennzeichnet, daß der erste Speicher (5) eine Kapazität von 288 Zeilen x 720 Punkten x 8 Bits hat.

8. Vorrichtung nach einem der Ansprüche 1 bis 7, dadurch gekennzeichnet, daß der Decodierer zum Reduzieren des Durchlaßbandes wenigstens m Halbbildspeicher (60A, 60B, 60C, 60D, 60E) (m ≧ 3) enthält, die am Ausgang des ersten Speichers (5) in Serie liegen, eine Decodierschaltung und vier Ausgänge (O1, O2, P1, P2) aufweist, die jeweils die geraden Punkte gerader Halbbilder und die ungeraden Punkte gerader Halbbilder, die geraden Punkte ungerader Halbbilder und die ungeraden Punkte ungerader Halbbilder erzeugen.

9. Vorrichtung nach Anspruch 8, dadurch gekennzeichnet, daß sie ferner vier Umschaltschaltungen (70A, 70B, 70C, 70D) enthält, die jeweils an einem Eingang ein Ausgangssignal (O1, O2, P1, P2) des Decodierers zum Reduzieren des Durchlaßbandes und am anderen Eingang entweder das Eingangssignal (1) der Speicher oder das Ausgangssignal (2, 3, 4) der drei ersten Speicher unter den m Speichern empfangen, wobei die Schaltungen abhängig von einem den Typ der Videosignale am Eingang anzeigenden Signal auf den einen oder den anderen Eingang umschalten.

## Claims

1. Device for conversion of frame frequency and of the number of lines making it possible to process high-definition video signals including a defined number of lines and a defined frame frequency, received by a high-definition television receiver capable of receiving, as input, video signals corresponding to different standards and of giving, as output, a high-definition type signal at a new frame frequency and on a new number of lines, the device including a first memory (5) for storing the frames of the input video signal, this memory delivering, as output, a video signal at the new frame frequency, characterized in that it moreover includes a passband reduction decoder connected at the output of the memory and delivering, as output, the even frames and the odd frames of the video signal separately at the new frame frequency, and a video processing circuit (7) connected at the output of the passband reduction decoder which carries out a vertical interpolation and a conversion of the number of lines in such a way as to deliver a video signal for display at the new frame frequency and with the new number of lines.

2. Device according to Claim 1, characterized in that the video processing circuit consists of:
- a circuit for processing static-type signals (30) connected respectively to the outputs of the passband reduction decoder (6) giving the even and odd frames and delivering a signal at the desired frame frequency and with the desired number of lines;
- a circuit for processing dynamic-type signals (21) connected alternately to the outputs of the passband reduction decoder giving the even and odd frames by means of a first changeover switching circuit (12) and delivering a signal at the desired frame frequency and with the desired number of lines, and
- a second changeover switching circuit (23) connected respectively to the static-type signal processing device (30) and to the dynamic-type signal processing device (29), the changeover switching of the circuit being driven by a movement detection signal (DATV).

3. Device according to Claim 2, characterized in that the static-type signal processing circuit consists of two identical vertical filters (13A, 13b) respectively receiving the even frames and the odd frames originating from the passband reduction decoder, and the outputs of which are connected to an adder (14).

4. Device according to Claim 3, characterized in that the static-type signal processing circuit includes at least one one-line delay cell connected at the output of the adder, in such a way as to deliver an output signal synchronous with the output signal originating from the dynamic-type signal processing circuit.

5. Device according to Claim 2, characterized in that the dynamic-type signal processing circuit consists of a vertical filter (21) making it possible to process the signals corresponding to the even and odd frames.

6. Device according to either of Claims 3 and 5, characterized in that each vertical filter consists of n delay cells (300, 301 or 310, 311, or 211, 212, 213, 214) giving a delay of one video line, n+1 multipliers (302, 303, 304 or 312, 313, 314 or 215, 216, 217, 218, 219) each receiving a specific multiplier coefficient on one input, which is a function of the number of lines to be displayed and, on the other input, either the input of the first cell or the output of the cell of rank j, j lying between 1 and n, a first adder (305, 315, 220) adding the output of the first two multipliers and n-1 adders (306, 316 or 221, 222, 223) adding the output of the preceding adder and that of the multiplier of rank k+1, k lying between 1 and n, n being a function of the number of frames to be processed simultaneously.

7. Device according to any one of Claims 1 to 6, characterized in that the first memory (5) has a capacity of 288 lines × 720 points × 8 bits.

8. Device according to any one of Claims 1 to 7, characterized in that the passband reduction decoder includes at least m frame memories (60A, 60B, 60C, 60D, 60E) (m ≧ 3) connected in series at the output of the first memory (5), a decoding circuit and four outputs (O1, O2, P1, P2) respectively generating the even points of the even frames and the odd points of the even frames, the even points of the odd frames and the odd points of the odd frames.

9. Device according to Claim 8, characterized in that it moreover includes four changeover switching circuits (70A, 70B, 70C, 70D) each receiving on one input an output (O1, O2, P1, P2) of the passband reduction decoder, and, on the other input, either the input (1) of the memories or the output (2, 3, 4) of the first three memories among the m memories, the said circuits switching over one or the other input depending on a signal indicating the type of video signal at the input.
